# EUROPEAN PATENT SPECIFICATION

(11) **EP 4 371 853 B1**
(45) Date of publication and mention of the grant of the patent: **13.11.2024**
(21) Application number: 22208394.1
(22) Date of filing: 18.11.2022
(51) Int. Cl.: B62D 1/19

(54) **STEERING COLUMN ASSEMBLY FOR A VEHICLE, VEHICLE AND METHOD FOR OPERATING A STEERING COLUMN ASSEMBLY**
LENKSÄULENANORDNUNG FÜR EIN FAHRZEUG, FAHRZEUG UND VERFAHREN ZUM BETREIBEN EINER LENKSÄULENANORDNUNG
ENSEMBLE DE COLONNE DE DIRECTION POUR UN VÉHICULE, VÉHICULE ET PROCÉDÉ DE FONCTIONNEMENT D'UN ENSEMBLE DE COLONNE DE DIRECTION

(43) Date of publication of application: 22.05.2024
(73) Proprietor: Volvo Car Corporation, 405 31 Göteborg (SE)
(72) Inventor: LEONG, Kevin, 40531 Göteborg (SE); WOLME, Kerstin, 40531 Göteborg (SE)
(74) Representative: Maiwald GmbH

(56) References cited:
- EP-A1- 0 725 000
- EP-A2- 0 474 400
- WO-A1-2017/125311
- DE-A1- 102012 220 551

## Description

The present disclosure relates to a steering column assembly for a vehicle. The steering column assembly comprises an inner tube and an outer tube. The inner tube and the outer tube extend along a common axis. In an operational position, a portion of the inner tube is arranged inside the outer tube. Moreover, the steering column assembly comprises an energy absorption mechanism being coupled to at least the inner tube and being configured to absorb energy in case of a relative movement of the inner tube with respect to the outer tube along the axis and out of the operational position.

Additionally, the present disclosure is directed to a vehicle comprising such a steering column assembly.

Furthermore, the present disclosure relates to a method for operating a steering column assembly.

The primary functionality of a steering column assembly is to transform a steering activity of a driver of the associated vehicle into a steering movement of the wheels. Following the steering movement of the wheels, the vehicle may change its driving direction.

Beyond that, modern steering column assemblies are configured to provide a secondary functionality which relates to energy absorption in a case in which the vehicle is in a collision situation or a crash situation. In such a situation, the inner tube and the outer tube are allowed to move relative to each other. Thereby, energy is absorbed by the energy absorption mechanism of the steering column assembly. The energy being absorbed by the steering column assembly is withheld from the driver. This enhances the safety of the driver in the crash situation.

Steering column assemblies which allow a relative movement between the inner tube and the outer tube in order to absorb energy in a crash situation are often called collapsible steering column assemblies or steering column assemblies which allow a so-called ride-down.

DE 10 2012 220551 A1 discloses a steering column assembly including an inner jacket disposed along a longitudinal axis and coupled to a host structure of a vehicle. The steering column assembly also includes an outer jacket arranged co-axially about the inner jacket and the longitudinal axis. The outer jacket is configured to translate along the longitudinal axis relatively to the inner jacket to thereby facilitate telescoping motion of the steering column assembly. The outer surface of the inner jacket and the inner surface of the outer jacket cooperate to define a telescope-inhibiting range of motion of the steering column assembly along the longitudinal axis. The steering column assembly is configured to impose telescope-resisting forces as the length of the steering column assembly decreases within the telescope-inhibiting range of motion.

EP 0 725 000 A1 teaches a steering shaft for a motor vehicle steering system including a spindle built-up from two profiled sections of which the outer one is tubular. The inner part is secured inside the tubular part against axial and angular movements. The tubular part incorporates at least one shear strip which is made by grooves which are machined into the outside diameter of the tube. The sheared out sections are bent inward and upward and are secured to the inner spindle section. On impact, e.g. during a crash, of driver with the steering wheel and column, the sections are further sheared out and folded over.

EP 0 474 400 A2 shows a collapsible steering column arrangement for a vehicle comprising a U-shaped deformable member connected to a fixed support for the steering column and a deforming member connected to the steering column itself. Under impact conditions caused by an accident the members move relative to one another thus allowing the steering column to collapse. This relative movement of the members enables the deforming member to contact the base of the 'U' to deform the U-shaped deformable member to reduce its overall length thus absorbing the energy of the impact and allowing the column to collapse in a controlled manner. The members can be shaped and dimensioned to give the desired energy absorption characteristics.

WO 2017/125311 A1 discloses an adjustable steering column for a motor vehicle, comprising a rotatable steering shaft, which has a shaft part that can be moved axially along the axis of rotation of the steering shaft and that is rotatably mounted in a jacket tube, which is mounted for axial sliding in a guide box retained on a retaining part fixed to the vehicle body and which can be adjusted by means of an electric motor. Said adjustable steering column is improved with regard to a small installation space of the electrical adjustment system in conjunction with high strength of the steering column in that a gear rack is attached to the outer face of the jacket tube and that the electric motor is fastened to the guide box and drives a worm gear, which protrudes through an opening of the guide box toward the jacket tube and meshes with the gear rack.

It is additionally known to make steering column assemblies adjustable such that a position of a steering wheel being connected to an end of the steering column assembly can be chosen as a function of physical properties of a driver and/or a driving mode. In other words, the inner tube and the outer tube of the steering column assembly may have different operational positions. In a case in which the steering column assembly is adjustable and collapsible at the same time, the energy absorption characteristics of the energy absorption mechanism may not be ideal for each of these operational positions.

Consequently, it is an objective of the present disclosure to provide a steering column assembly, wherein the energy absorption characteristics in a crash situation may be adapted to different operational positions of the inner tube and the outer tube.

The problem is at least partially solved or alleviated by the subject matter of the independent claims of the present disclosure, wherein further examples are incorporated in the dependent claims.

According to a first aspect, there is provided a steering column assembly for a vehicle. The steering column assembly comprises an inner tube and an outer tube. The inner tube and the outer tube extend along a common axis. In an operational position, a portion of the inner tube is arranged inside the outer tube. Moreover, the steering column assembly comprises an energy absorption mechanism being coupled to at least the inner tube and being configured to absorb energy in case of a relative movement of the inner tube with respect to the outer tube along the axis and out of the operational position. An energy absorption capacity per distance unit of the energy absorption mechanism is variable along the axis. Consequently, at least two different energy absorption capacities per distance unit are provided along the axis. The distance unit is for example a centimeter or a millimeter. Thus, the energy absorption capacity per distance unit relates to an amount of energy that can be absorbed by a relative movement of the inner tube with respect to the outer tube over the distance unit. In alternative terms, the energy absorption capacity per distance unit may also be called a collapsing resistance per distance unit of the steering column assembly. This has the effect that in a crash situation, in which the inner tube and the outer tube move relative to one another, different amounts of energy may be absorbed depending on the relative position of the inner tube and the outer tube that corresponds to the operational position. Put otherwise, different energy absorption characteristics may be realized for different relative positions of the inner tube and the outer tube, i.e. for different operational positions. For example, the energy absorption mechanism may absorb a different amount of energy in a situation in which the steering column assembly is in a stowed position, which may for example be used during an autonomous drive, and in a situation in which the steering column assembly is in an extended position, which may for example be used during a non-autonomous drive. The different amounts of energy may be well adapted to the corresponding driving mode. At the same time, the steering column assembly is structurally simple and compact.

Since a portion of the inner tube is arranged inside the outer tube and the inner tube and the outer tube may move relative to one another, the steering column assembly may also be called a telescopic steering column assembly.

In an example, the inner tube may be associated to a steering wheel. In more detail, a steering wheel may be connectable to the inner tube. The outer tube may be associated with a steering mechanism of the wheels. This means that the outer tube may be connectable to such a steering mechanism.

It is noted that the energy absorption mechanism is always coupled to the inner tube. Additionally, the energy absorption mechanism may be coupled to the outer tube in a direct or indirect manner. In all these alternatives, energy resulting from a relative movement between the inner tube and the outer tube may be efficiently and effectively absorbed.

According to the invention, the energy absorption mechanism comprises an inner friction surface being arranged on the inner tube and being frictionally coupled to the outer tube. Additionally or alternatively, the energy absorption mechanism comprises an outer friction surface being arranged on the outer tube and being frictionally coupled to the inner tube. Consequently, the energy absorption mechanism is configured to absorb energy resulting from a relative movement between the inner tube and the outer tube in that at least a portion of the outer tube moves over the inner friction surface and/or at least a portion of the inner tube moves over the outer friction surface. Thus, energy resulting from a crash situation may be reliably absorbed by the energy absorption mechanism.

In an example, the inner friction surface and/or the outer friction surface comprises at least two friction zones being arranged at different positions along the axis. The at least two friction zones differ in at least one of:
- a respective diameter,
- a respective surface roughness, and
- a respective surface coating.

Using the at least two friction zones, different energy absorption capacities per distance unit can be realized in a simple and reliable manner. Different diameters of the friction zones may lead to different normal forces acting on the friction surfaces. Thereby, the energy being absorbed by frictional engagement may be adjusted. The same applies to the surface roughness and a surface coating.

It is noted that the different positions of the at least two friction zones may be arranged along the axis such that the at least two friction zones are directly adjacent to one another. Alternatively, a distance or gap may be provided between neighboring friction zones. According to the invention, the energy absorption mechanism further comprises at least one of a deformation element, a shearing element or a sliding mechanism with a rail element.

According to an alternative of the invention, the energy absorption mechanism further comprises a deformation element being coupled to at least the inner tube and being configured to deform upon a relative movement of the inner tube with respect to the outer tube out of the operational position and along the axis. Consequently, in this example, the energy is absorbed in that the deformation element is deformed. This is a reliable manner for absorbing energy resulting from a crash situation.

It is noted that the deformation element is always coupled to the inner tube. Additionally, the deformation element may be coupled to the outer tube in a direct or indirect manner. In all these alternatives, energy resulting from a relative movement between the inner tube and the outer tube may be efficiently and effectively absorbed.

In an example, the deformation element comprises at least two deformation zones, wherein the at least two deformation zones differ in at least one of:
- a respective geometrical dimension,
- a respective material, and
- a respective coating.

The geometrical dimension may for example relate to a height, a width or a length. Of course, it is also possible that the geometrical dimension relates to a dimension of a cross-section. Based on the different geometric dimensions, also different forms of the two deformation zones may be used. Consequently, a deformation resistance of the deformation element may be adjusted, thereby creating different energy absorption capacities per distance unit. The same applies to the use of different materials and/or coatings. In the latter case, one deformation zone may be equipped with a coating while another deformation zone may not comprise a coating.

According to an alternative of the invention, the energy absorption mechanism comprises both and inner and/or outer friction surface as explained above and a deformation element as explained above.

According to an alternative of the invention, the energy absorption mechanism further comprises a shearing element being coupled to at least the inner tube and being configured to at least partially shear off upon a relative movement of the inner tube with respect to the outer tube out of the operational position and along the axis. Thus, energy resulting from a crash situation is absorbed by shearing of the shearing element. This is a reliable manner for absorbing energy.

It is noted that the shearing element is always coupled to the inner tube. Additionally, the shearing element may be coupled to the outer tube in a direct or indirect manner. In all these alternatives, energy resulting from a relative movement between the inner tube and the outer tube may be efficiently and effectively absorbed.

In an example, the shearing element comprises at least two shearing zones, wherein the at least two shearing zones differ in at least one of:
- a respective geometrical dimension,
- a respective material, and
- a respective coating.

Again, the geometrical dimension may for example relate to a height, a width or a length. Of course, it is also possible that the geometrical dimension relates to a dimension of a cross-section. Based on the different geometric dimensions, also different forms of the two shearing zones may be used. Consequently, a shearing resistance of the shearing element may be adjusted, thereby creating different energy absorption capacities per distance unit. The same applies to the use of different materials and/or coatings. In the latter case, one shearing zone may be equipped with a coating while another shearing zone may not comprise a coating.

According to an alternative of the invention, the energy absorption mechanism comprises both and inner and/or outer friction surface as explained above and a shearing element as explained above.

According to an alternative of the invention, the energy absorption mechanism further comprises a sliding mechanism with a rail element being coupled to the inner tube, and a carriage element. The carriage element is configured to slide on the rail element upon a relative movement of the inner tube with respect to the outer tube out of the operational position and along the axis. The carriage element may be connected to the outer tube in a direct or indirect manner. Thus, energy is absorbed by the carriage sliding on the rail element. This is simple and reliable.

In an example, the rail element comprises at least two sliding zones being arranged at different positions along the axis, wherein the at least two sliding zones differ in at least one of:
- a respective geometrical dimension,
- a respective surface structure,
- a respective surface inclination with respect to the axis,
- a respective surface roughness, and
- a respective surface coating.

In this context, sliding zones refer to zones in which the carriage and the rail interact with one another. By altering a corresponding geometrical dimension, surface structure, surface inclination, surface roughness or surface coating, a sliding resistance may be altered. Consequently, different amounts of energy per distance unit may be absorbed by sliding the carriage on the rail element.

According to an alternative of the invention, the energy absorption mechanism comprises both and inner and/or outer friction surface as explained above and a sliding mechanism as explained above.

In an example, the steering column assembly may selectively assume at least two different operational positions, wherein in each of the two different operational positions a portion of different size of the inner tube is arranged inside the outer tube, and wherein a different energy absorption capacity is associated to each of the at least two different operational positions. In other words, the steering column assembly is adjustable or has an adjustable length. Consequently, a position of a steering wheel that may be connected to an end of the steering column assembly may be adjusted. By associating different energy absorption capacities to each of the different operational positions, the energy absorption characteristic is made a function of the operational position. The above-mentioned ways for creating different energy absorption capacities per distance unit may be used. Consequently, an energy absorption capacity which is appropriate for each of the operational positions, may be chosen.

According to a second aspect, there is provided a vehicle comprising a steering column assembly according to the present disclosure. Consequently, at least two different energy absorption capacities per distance unit are provided along the axis of the steering column assembly. This has the effect that in a crash situation, in which the inner tube and the outer tube of the steering column assembly move relative to one another, different amounts of energy may be absorbed depending on the relative position of the inner tube and the outer tube that correspond to the operational position. Put otherwise, different energy absorption characteristics may be realized for different relative positions of the inner tube and the outer tube, i.e. for different operational positions. For example, the energy absorption mechanism may absorb a different amount of energy in a situation in which the steering column assembly is in a stowed position, which may for example be used during an autonomous drive, and in a situation in which the steering column assembly is in an extended position, which may for example be used during a non-autonomous drive. The different amounts of energy may be well adapted to the corresponding driving mode. At the same time, the steering column assembly is structurally simple and compact.

According to a third aspect, there is provided a method for operating a steering column assembly of the present disclosure. The method comprises:
- absorbing a first amount of energy per distance unit during a first portion of a relative movement of the inner tube with respect to the outer tube along the axis and out of the operational position, and
- absorbing a second amount of energy per distance unit during a second portion of a relative movement of the inner tube with respect to the outer tube along the axis and out of the operational position, wherein the second amount of energy per distance unit is different from the first amount of energy per distance unit.

This method may be applied in a crash situation in which the inner tube and the outer tube of the steering column assembly move relative to one another in order to absorb energy resulting from the crash situation. Consequently, the energy absorption characteristics may vary along the axis. Moreover, the total amount of energy being absorbed during the relative movement of the inner tube with respect to the object to may be adjusted. In other words, at least two different energy absorption capacities per distance unit are provided along the axis of the steering column assembly. This has the effect that in a crash situation, in which the inner tube and the outer tube of the steering column assembly move relative to one another, different amounts of energy may be absorbed depending on the relative position of the inner tube and the outer tube that corresponds to the operational position. Put otherwise, different energy absorption characteristics may be realized for different relative positions of the inner tube and the outer tube, i.e. for different operational positions. For example, the energy absorption mechanism may absorb a different amount of energy in a situation in which the steering column assembly is in a stowed position, which may for example be used during an autonomous drive, and in a situation in which the steering column assembly is in an extended position, which may for example be used during a non-autonomous drive. The different amounts of energy may be well adapted to the corresponding driving mode. At the same time, the steering column assembly is structurally simple and compact.

It should be noted that the above examples mentioned in connection with the steering column assembly according to the first aspect of the invention may be combined with the examples mentioned in connection with the second and/or third aspect of the invention and vice versa.

These and other aspects of the present disclosure will become apparent from and elucidated with reference to the examples described hereinafter.

Examples of the disclosure will be described in the following with reference to the following drawings.
- Figure 1: shows a vehicle according to the present disclosure comprising a steering column assembly according to the present disclosure which may be operated using a method according to the present disclosure,
- Figure 2: shows a detail II of the steering column assembly of Figure 1 in a sectional view,
- Figure 3: shows a section of a first alternative steering column assembly which can be used in the vehicle of Figure 1,
- Figure 4: shows a partly sectional, more detailed view of the steering column assembly of Figure 3,
- Figure 5: shows a section of a second alternative steering column assembly which can be used in the vehicle of Figure 1,
- Figure 6: shows a more detailed view of the steering column assembly of Figure 5,
- Figure 7: shows a section of a third alternative steering column assembly which can be used in the vehicle of Figure 1,
- Figure 8: shows ride-down forces of different energy absorption mechanisms, wherein the ride-down forces are denoted over a ride-down distance and wherein the steering column assembly is in a first operational position, and
- Figure 9: shows ride-down forces of different energy absorption mechanisms, wherein the ride-down forces are denoted over a ride-down distance and wherein the steering column assembly is in a second operational position.

The Figures are merely schematic representations and serve only to illustrate examples of the disclosure. Identical or equivalent elements are in principle provided with the same reference signs.

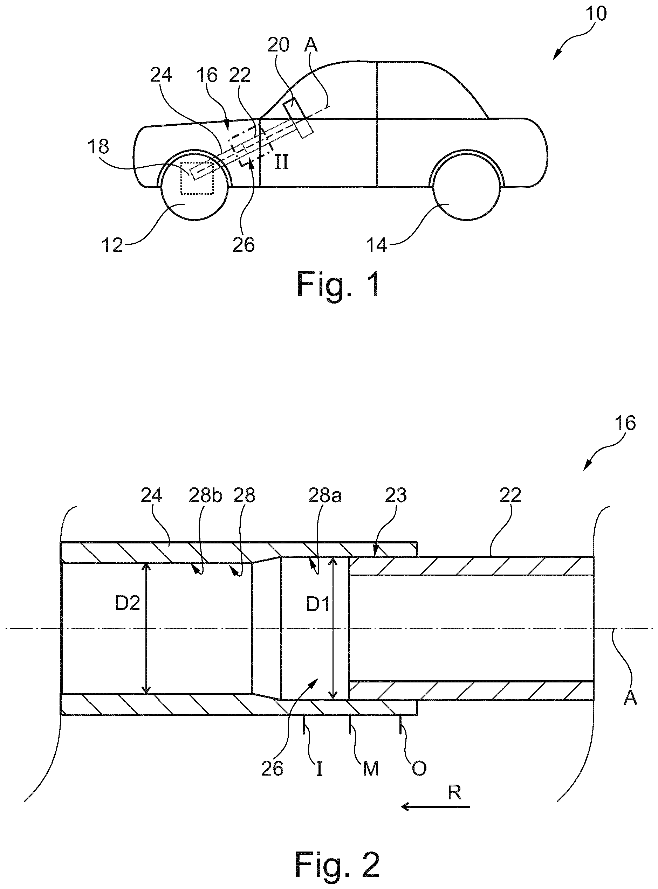

Figure 1 shows a vehicle 10.

The vehicle 10 comprises front wheels 12 and rear wheels 14. The front wheels 12 are steerable.

To this end, the vehicle 10 comprises a steering column assembly 16.

One end of the steering column assembly 16 is coupled to a steering mechanism 18 of the front wheels 12. A steering wheel 20 is coupled to an opposite end of the steering column assembly 16. The steering wheel 20 is arranged in an interior of the vehicle 10, such that a driver of the vehicle 10 may manipulate the steering wheel 20.

The steering column assembly 16 is shown in more detail in Figure 2.

The steering column assembly 16 comprises an inner tube 22 and an outer tube 24.

The inner tube 22 and the outer tube 24 extend along a common axis A.

Moreover, a portion of the inner tube 22 is arranged inside the outer tube 24.

This is the case in each operational position.

In the present example, a length of the steering column assembly 16 is adjustable. This means that the inner tube 22 and the outer tube24 may assume different relative positions.

In Figure 2, the inner tube 22 and the outer tube 24 are in a relative position to one another which may be called a middle position being indicated with the letter M.

In an outer position, the portion of the inner tube 22 which is received inside the outer tube 24 is smaller than in the middle position. This position is indicated with the letter O.

In an inner position, the portion of the inner tube 22 which is received inside the outer tube 24 is bigger than in the middle position. This position is indicated with the letter I.

The middle position M, the outer position O and the inner position I are all operational positions.

In the outer position, the steering wheel 20 is relatively close to a driver of the vehicle 10, wherein in the inner position I, the steering wheel 20 is relatively distant from the driver.

The steering column assembly 16 also comprises an energy absorption mechanism 26.

In the example of Figure 2, the energy absorption mechanism 26 comprises an outer friction surface 28 being arranged on the outer tube 24 and being frictionally coupled to the inner tube 22.

Optionally, the inner tube 22 carries an inner friction surface 23 being arranged on an outer circumference of the inner tube 22.

Thus, in this example, the energy absorption mechanism 26 is coupled to the inner tube 22 and to the outer tube 24.

Furthermore, the energy absorption mechanism 26 is configured to absorb energy in case of a relative movement of the inner tube 22 with respect to the outer tube 24 along the axis A and out of the respective operational position, i.e. out of the inner position I, the middle position M or the outer position O.

In case of a relative movement between the inner tube 22 and the outer tube 24, the inner tube 22 will slide along the outer friction surface 28. This movement is subject to friction and thus transforms kinetic energy into friction energy.

An energy absorption capacity per distance unit of the energy absorption mechanism 26 is variable along the axis A.

In the example of Figure 2 this is realized in that the outer friction surface 28 comprises at two friction zones 28a, 28b being arranged at different positions along the axis A.

The first friction zone 28a and the second friction zone 28b differ in respect of their diameters.

A diameter D1 of the first friction zone 28a is bigger than a diameter D2 of the second friction zone 28b.

Thus, if the inner tube 22 moves along a ride-down direction R with respect to the outer tube 24, the inner tube 22 is first in frictional engagement with the first friction zone 28a. A length over which the inner tube 22 is in frictional engagement with the first friction zone 28a depends on the operational position, i.e. the inner position I, the middle position M or the outer position O.

Thereafter, the inner tube 22 enters into frictional engagement with the second friction zone 28b. This goes together with squeezing the inner tube 22 due to the diameter D2 which is reduced as compared to diameter D1.

Consequently, an energy absorption capacity per distance unit of the second friction zone 28b is higher than an energy absorption capacity per distance unit of the first friction zone 28a.

The steering column assembly 16 may be operated using a method for operating a steering column.

This method comprises absorbing a first amount of energy per distance unit during a first portion of a relative movement of the inner tube 22 with respect to the outer tube 24 along the axis A and out of the operational position. The first portion of the relative movement corresponds to a relative movement wherein the inner tube 22 is frictionally coupled with the first friction zone 28a.

The method further comprises absorbing a second amount of energy per distance unit during a second portion of a relative movement of the inner tube 22 with respect to the outer tube 24 along the axis A and out of the operational position, wherein the second amount of energy per distance unit is different from the first amount of energy per distance unit. The second portion of the relative movement corresponds to a movement, wherein the inner tube 22 is in frictional engagement with the second friction zone 28b.

The relative movement of the inner tube 22 with respect to the outer tube 24 may be limited by an abutment means.

It is noted that additionally or alternatively to providing two friction zones 28a, 28b with different diameters D1, D2, the friction zones 28a, 28b can also differ with respect to a surface roughness and/or a surface coating. The effect is the same as has been explained in connection with the different diameters D1, D2.

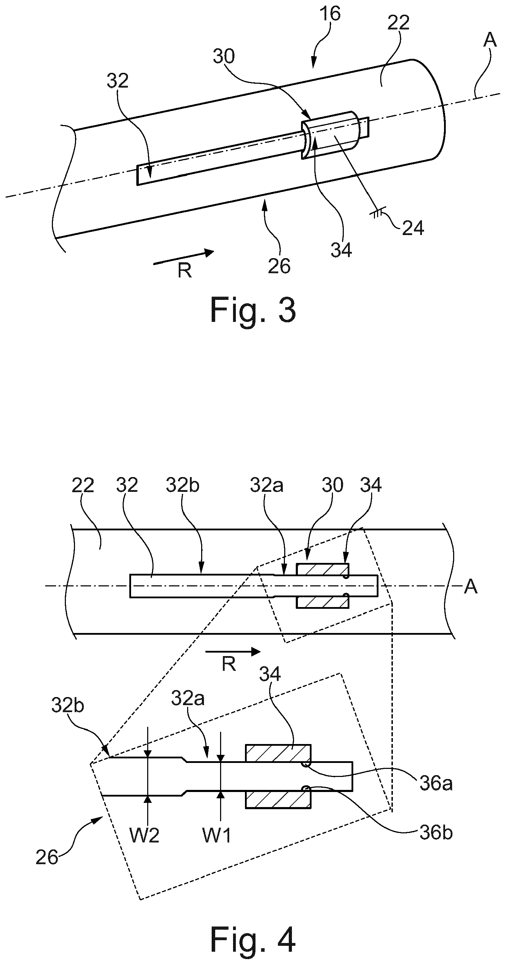

Figures 3 and 4 show a further alternative steering column assembly 16.

For the ease of explanation, the outer tube 24 is represented in a schematic manner.

In the example of Figures 3 and 4, the energy absorption mechanism 26 comprises the energy absorption mechanism 26 as shown in Figure 2 as a first component of the energy absorption mechanism 26 and a sliding mechanism 30 with a rail element 32 and a carriage 34. The sliding mechanism 30 forms a second component of the energy absorption mechanism 26. In other words, the sliding mechanism 30 is used in addition to the friction-based mechanism of Figure 2.

The rail element 32 is fixedly connected to the inner tube 22.

The carriage 34 is indirection connected to the outer tube 24.

As can best be seen in Figure 4, the rail element 32 comprises a first sliding zone 32a having a first width W1 and a second sliding zone 32b having a second width W2.

The first sliding zone 32a and the second sliding zone 32b are arranged adjacent to one another along the axis A.

Due to the different widths W1, W2, a clamping force acting between the rail element 32 and the carriage 34 is different in the first sliding zone 32a and the second sliding zone 32b. Since in the present example, the width W2 is bigger than the width W 1, an energy absorption capacity per distance unit of the second sliding zone 32b is bigger than an energy absorption capacity per distance unit of the first sliding zone 32a.

The rail element 32 additionally comprises two holding depressions 36a, 36b, wherein each of the holding depressions 36a, 36b may be engaged by the carriage 34 in a specific relative position of the carriage 34 with respect to the rail element 32.

Also in the example of Figures 3 and 4, the steering column assembly 16 is adjustable. Depending on the operational position of the steering column assembly 16, the carriage 34 is located at a different position on the rail element 32. This leads to different characteristics of the energy absorption mechanism 26 depending on the operational position.

The steering column assembly 16 of Figures 3 and 4 may also be operated using a method for operating a steering column.

This method comprises absorbing a first amount of energy per distance unit during a first portion of a relative movement of the inner tube 22 with respect to the outer tube 24 along the axis A and out of the operational position. In the present example, the first portion of the relative movement corresponds to a movement of the carriage 34 out of the holding depressions 36a, 36b.

A second amount of energy per distance unit is absorbed during a second portion of the relative movement. During this portion of the movement, the carriage 34 slides along the first sliding zone 32a. The second amount of energy per distance unit is different from the first amount of energy per distance unit.

The method further comprises absorbing a third amount of energy per distance unit during a third portion of a relative movement of the inner tube 22 with respect to the outer tube 24 along the axis A and out of the operational position, wherein the third amount of energy per distance unit is different from the first amount of energy per distance unit and the second amount of energy per distance unit. The third portion of the relative movement corresponds to the carriage 34 sliding along the second sliding zone 32b.

Additionally, during the first and second portion of the relative movement of the inner tube 22 with respect to the outer tube 24, the inner tube 22 slides on first friction zone 28a of the outer friction surface 28. During the third portion of the relative movement of the inner tube 22 with respect to the outer tube 24, the inner tube 22 slides on second friction zone 28b of the outer friction surface 28.

As before, the relative movement of the inner tube 22 with respect to the outer tube 24 may be limited by an abutment means.

It is noted that additionally or alternatively, the first sliding zone 32a and the second sliding zone 32b may differ in at least one of a respective surface structure, a respective surface inclination with respect to the axis, a respective surface roughness, and a respective surface coating. The effect is the same which has already been explained in connection with the different widths W1, W2.

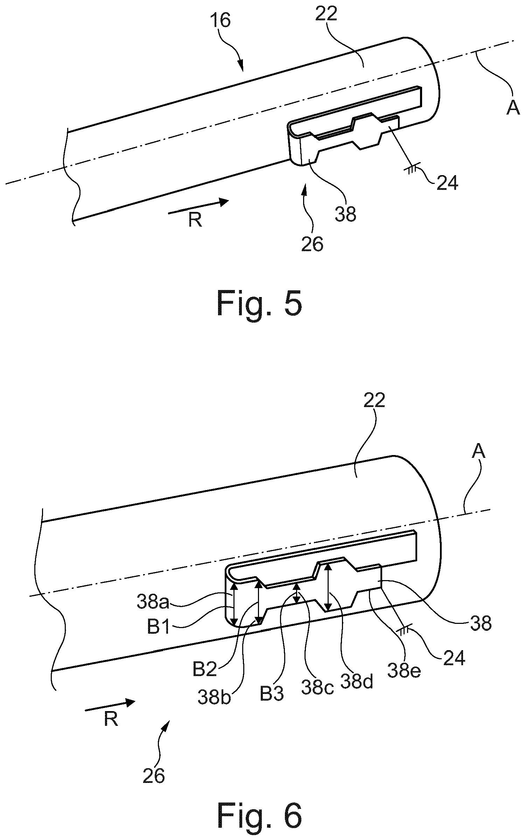

Figures 5 and 6 show a further alternative steering column assembly 16.

For the ease of explanation, the outer tube 24 is represented schematically.

In the example of Figures 5 and 6, the energy absorption mechanism 26 comprises the energy absorption mechanism 26 as shown in Figure 2 as a first component of the energy absorption mechanism 26 and a deformation element 38. The deformation element 38 forms a second component of the energy absorption mechanism 26. In other words, the deformation element 38 is used in addition to the friction-based mechanism of Figure 2.

One end of the deformation element 38 is fixedly connected to the inner tube 22. The other end of the deformation element 38 is connectable to the outer tube 24.

The deformation element 38 is configured to deform upon a relative movement of the inner tube 22 with respect to the outer tube 24 out of the operational position and along the axis A.

In the example of Figures 5 and 6, the deformation element 38 is a bending strap.

The strap has a substantially constant thickness, but comprises a total of five deformation zones being denoted 38a, 38b, 38c, 38d and 38e which differ with respect to the respective width. The width of the different deformation zones 38a, 38b, 38c, 38d and 38e are denoted B1, B2, B3, B4, and B5.

Due to the different widths B1, B2, B3, B4, and B5, each deformation zone 8a, 38b, 38c, 38d and 38e has a different bending resistance. In other words, an energy absorption capacity per distance unit of the deformation zones 38a, 38b, 38c, 38d and 38e is different.

The steering column assembly 16 of Figures 5 and 6 may also be operated using a method for operating a steering column.

This method comprises absorbing a first amount of energy per distance unit during a first portion of a relative movement of the inner tube 22 with respect to the outer tube 24 along the axis A and out of the operational position. During the first portion of the relative movement, the first deformation zone 38a is bent.

The method also comprises absorbing a second amount of energy per distance unit during a second portion of a relative movement of the inner tube 22 with respect to the outer tube 24 along the axis A and out of the operational position. During the second portion of the relative movement, the second deformation zone 38b is bent.

The method further comprises absorbing a third amount of energy per distance unit during a third portion of a relative movement of the inner tube 22 with respect to the outer tube 24 along the axis A and out of the operational position. During the third portion of the relative movement, the third deformation zone 38c is bent.

The method additionally comprises absorbing a fourth amount of energy per distance unit during a fourth portion of a relative movement of the inner tube 22 with respect to the outer tube 24 along the axis A and out of the operational position. During the fourth portion of the relative movement, the fourth deformation zone 38d is bent.

Furthermore, the method comprises absorbing a fifth amount of energy per distance unit during a fifth portion of a relative movement of the inner tube 22 with respect to the outer tube 24 along the axis A and out of the operational position. During the fifth portion of the relative movement, the fifth deformation zone 38e is bent.

Additionally, during the first, second, and third portion of the relative movement of the inner tube 22 with respect to the outer tube 24, the inner tube 22 slides on first friction zone 28a of the outer friction surface 28. During the fourth and fifth portion of the relative movement of the inner tube 22 with respect to the outer tube 24, the inner tube 22 slides on second friction zone 28b of the outer friction surface 28.

As before, the relative movement of the inner tube 22 with respect to the outer tube 24 may be limited by an abutment means.

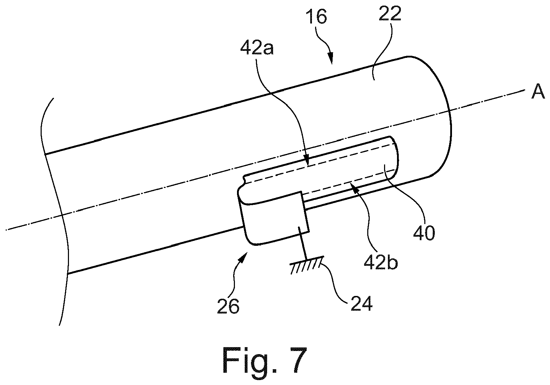

Figure 7 shows a further alternative steering column assembly 16.

For the ease of explanation, the outer tube 24 is represented schematically.

In the example of Figure 7, the energy absorption mechanism 26 comprises the energy absorption mechanism 26 as shown in Figure 2 as a first component of the energy absorption mechanism 26 and a shearing element 40. The shearing element 40 forms a second component of the energy absorption mechanism 26. In other words, the shearing element 40 is used in addition to the friction-based mechanism of Figure 2.

One end of the shearing element 38 is fixedly connected to the inner tube 22. The other end of the shearing element 40 is connectable to the outer tube 24.

The shearing element comprises two shearing zones 42a, 42b which in the example of Figure 7 are formed as perforated sections of the shearing element 40.

Thus, the shearing element 40 is configured to at least partially shear off upon a relative movement of the inner tube 22 with respect to the outer tube 24 out of the operational position and along the axis. The shearing happens in the shearing zones 42a, 42b.

It is understood that the shearing resistance may be tuned by tuning the perforations in the shearing zones 42a, 42b, e.g. by varying a distance between holes forming the perforation or by varying diameters of holes forming the perforation.

Thus, different amounts of energy per distance unit may be absorbed by the shearing element 40.

The steering column assembly 16 of Figure 7 may also be operated using a method for operating a steering column.

As before, the relative movement of the inner tube 22 with respect to the outer tube 24 may be limited by an abutment means.

It is noted that in further alternatives, the shearing zones 42a, 42b may as well differ in at least one of a respective geometrical dimension, a respective material, and a respective coating. As before, the shearing element is provided in addition to the friction-based mechanism of Figure 2.

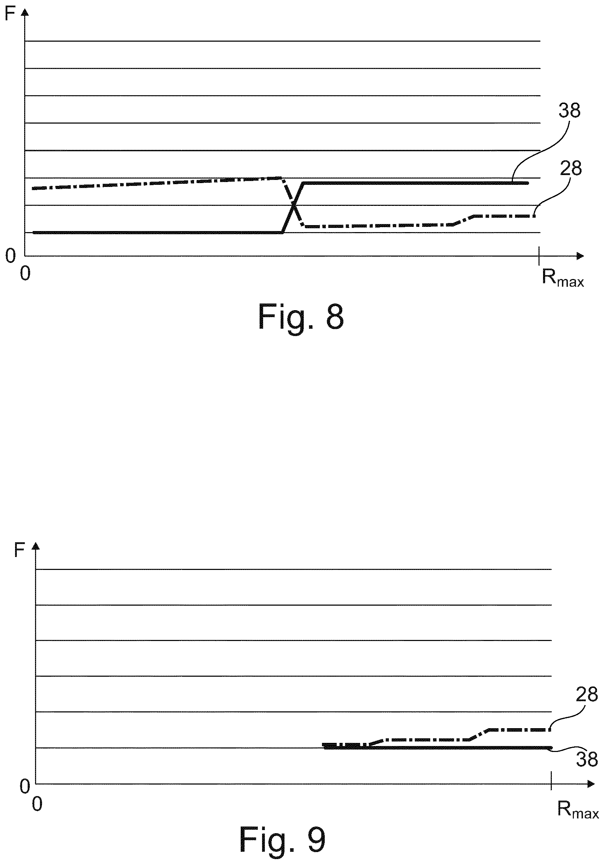

Figure 8 shows ride-down forces F of an energy absorption mechanism 26 comprising an outer friction surface 28 and an energy absorption mechanism 26 comprising a deformation element 38.

The ride-down forces F are denoted over a ride-down distance from zero to Rmax.

In the example of Figure 8, the steering column assembly 16 is in an operational position corresponding to ride-down distance zero.

As can be seen from the Figure, both the outer friction surface 28 and the deformation element 38 realize different levels of energy absorption capacities per distance unit.

It is noted that the energy absorption mechanism 26 comprising the outer friction surface 28 and the energy absorption mechanism 26 comprising the deformation element 38 may be used alone or in combination. In the latter case, the ride-down forces resulting from both the friction surface 28 and the deformation element 38 need to be added.

Figure 9 shows ride-down forces F of an energy absorption mechanism 26 comprising an outer friction surface 28 and an energy absorption mechanism 26 comprising a deformation element 38.

The ride-down forces F are denoted over a ride-down distance from zero to Rmax.

In contrast to the example of Figure 8, now the steering column assembly 16 is in an operational position corresponding to a ride-down distance of roughly 50%.

As can be seen from the Figure, the outer friction surface 28 realizes different levels of energy absorption capacities per distance unit. The ride-down force resulting from the deformation element 38 is roughly constant.

It is noted again that the energy absorption mechanism 26 comprising the outer friction surface 28 and the energy absorption mechanism 26 comprising the deformation element 38 may be used alone or in combination. In the latter case, the ride-down forces resulting from both the friction surface 28 and the deformation element 38 need to be added.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: front wheels
- 14: rear wheels
- 16: steering column assembly
- 18: steering mechanism of the front wheels
- 20: steering wheel
- 22: inner tube
- 23: inner friction surface
- 24: outer tube
- 26: energy absorption mechanism
- 28: outer friction surface
- 28a: first friction zone of the outer friction surface
- 28b: second friction zone of the outer friction surface
- 30: sliding mechanism
- 32: rail element
- 32a: first sliding zone
- 32b: second sliding zone
- 34: carriage
- 36a: holding depression
- 36b: holding depression
- 38: deformation element
- 38a: first deformation zone of the deformation element
- 38b: second deformation zone of the deformation element
- 38c: third deformation zone of the deformation element
- 38d: fourth deformation zone of the deformation element
- 38e: fifth deformation zone of the deformation element
- 40: shearing element
- 42a: shearing zone
- 42b: shearing zone

- A: axis
- B 1: width of the first deformation zone
- B2: width of the second deformation zone
- B3: width of the third deformation zone
- B4: width of the fourth deformation zone
- B5: width of the fifth deformation zone
- I: inner position
- M: middle position
- O: outer position
- D 1: diameter of the first friction zone
- D2: diameter of the second friction zone
- W1: width of the first sliding zone
- W2: width of the second sliding zone

## Claims

1. A steering column assembly (16) for a vehicle (10), comprising an inner tube (22) and an outer tube (24), wherein the inner tube (22) and the outer tube (24) extend along a common axis (A) and wherein in an operational position a portion of the inner tube (22) is arranged inside the outer tube (24), and
an energy absorption mechanism (26) being coupled to at least the inner tube (22) and being configured to absorb energy in case of a relative movement of the inner tube (22) with respect to the outer tube (24) along the axis (A) and out of the operational position, wherein an energy absorption capacity per distance unit of the energy absorption mechanism (26) is variable along the axis (A),
wherein the energy absorption mechanism (26) comprises an inner friction surface being arranged on the inner tube (22) and being frictionally coupled to the outer tube (24) and/or wherein the energy absorption mechanism (26) comprises an outer friction surface (28) being arranged on the outer tube (24) and being frictionally coupled to the inner tube (22), and
**characterized in that**
the energy absorption mechanism (26) comprises at least one of:
- a deformation element (38) being coupled to at least the inner tube (22) and being configured to deform upon a relative movement of the inner tube (22) with respect to the outer tube (24) out of the operational position and along the axis (A), and
- a shearing element (40) being coupled to at least the inner tube (22) and being configured to at least partially shear off upon a relative movement of the inner tube (22) with respect to the outer tube (24) out of the operational position and along the axis (A), and
- a sliding mechanism (30) with a rail element (32) being coupled to the inner tube (22) and a carriage element (34), wherein the carriage element (34) is configured to slide on the rail element (32) upon a relative movement of the inner tube (22) with respect to the outer tube (24) out of the operational position and along the axis (A).

2. The steering column assembly (16) according to claim 1, wherein the inner friction surface and/or the outer friction surface (28) comprises at least two friction zones (28a, 28b) being arranged at different positions along the axis (A), wherein the at least two friction zones (28a, 28b) differ in at least one of:
- a respective diameter (D1, D2),
- a respective surface roughness, and
- a respective surface coating.

3. The steering column assembly (16) according to claim 1 or 2, wherein the deformation element (38) comprises at least two deformation zones (38a, 38b, 38c, 38d, 38e), wherein the at least two deformation zones (38a, 38b, 38c, 38d, 38e) differ in at least one of:
- a respective geometrical dimension (B1, B2, B3, B4, B5),
- a respective material, and
- a respective coating.

4. The steering column assembly (16) according to any one of the preceding claims, wherein the shearing element (40) comprises at least two shearing zones (42a, 42b), wherein the at least two shearing zones (42a, 42b) differ in at least one of:
- a respective geometrical dimension,
- a respective material, and
- a respective coating.

5. The steering column assembly (16) according to any one of the preceding claims, wherein the rail element (32) comprises at least two sliding zones (32a, 32b) being arranged at different positions along the axis (A), wherein the at least two sliding zones (32a, 32b) differ in at least one of:
- a respective geometrical dimension (W1, W2),
- a respective surface structure,
- a respective surface inclination with respect to the axis (A),
- a respective surface roughness, and
- a respective surface coating.

6. The steering column assembly (16) according to any one of the preceding claims, wherein the steering column assembly (16) may selectively assume at least two different operational positions (I, M, O), wherein in each of the at least two different operational positions (I, M, O) a portion of different size of the inner tube (22) is arranged inside the outer tube (24), and wherein a different energy absorption capacity is associated to each of the at least two different operational positions (I, M, O).

7. A vehicle (10) comprising a steering column assembly (16) according to any one of the preceding claims.

8. A method for operating a steering column assembly (16) of any one of claims 1 to 6, comprising:
- absorbing a first amount of energy per distance unit during a first portion of a relative movement of the inner tube (22) with respect to the outer tube (24) along the axis (A) and out of the operational position, and
- absorbing a second amount of energy per distance unit during a second portion of a relative movement of the inner tube (22) with respect to the outer tube (24) along the axis (A) and out of the operational position, wherein the second amount of energy per distance unit is different from the first amount of energy per distance unit.

## Patentansprüche

1. Lenksäulenanordnung (16) für ein Fahrzeug (10), umfassend:
ein inneres Rohr (22) und ein äußeres Rohr (24), wobei sich das innere Rohr (22) und das äußere Rohr (24) entlang einer gemeinsamen Achse (A) erstrecken und wobei in einer Betriebsposition ein Abschnitt des inneren Rohrs (22) im Inneren des äußeren Rohrs (24) angeordnet ist, und
einen Energieabsorptionsmechanismus (26), der mit mindestens dem inneren Rohr (22) gekoppelt und eingerichtet ist, um Energie im Falle einer relativen Bewegung des inneren Rohrs (22) in Bezug auf das äußere Rohr (24) entlang der Achse (A) und aus der Betriebsposition heraus zu absorbieren, wobei eine Energieabsorptionskapazität pro Abstandseinheit des Energieabsorptionsmechanismus (26) entlang der Achse (A) variabel ist,
wobei der Energieabsorptionsmechanismus (26) eine innere Reibungsfläche umfasst, die auf dem inneren Rohr (22) angeordnet ist und reibschlüssig mit dem äußeren Rohr (24) gekoppelt ist, und/oder wobei der Energieabsorptionsmechanismus (26) eine äußere Reibungsfläche (28) umfasst, die auf dem äußeren Rohr (24) angeordnet ist und reibschlüssig mit dem inneren Rohr (22) gekoppelt ist, und
**dadurch gekennzeichnet, dass** der Energieabsorptionsmechanismus (26) mindestens eines von Folgendem umfasst:
- ein Verformungselement (38), das mit mindestens dem inneren Rohr (22) gekoppelt und eingerichtet ist, um sich bei einer relativen Bewegung des inneren Rohrs (22) in Bezug auf das äußere Rohr (24) aus der Betriebsposition und entlang der Achse (A) zu verformen, und
- ein Scherelement (40), das mit mindestens dem inneren Rohr (22) gekoppelt und eingerichtet ist, um bei einer relativen Bewegung des inneren Rohrs (22) in Bezug auf das äußere Rohr (24) aus der Betriebsposition und entlang der Achse (A) zumindest teilweise abzuscheren, und
- einen Schiebemechanismus (30) mit einem Schienenelement (32), das mit dem inneren Rohr (22) gekoppelt ist, und einem Schlittenelement (34), wobei das Schlittenelement (34) eingerichtet ist, um sich auf dem Schienenelement (32) bei einer relativen Bewegung des inneren Rohrs (22) in Bezug auf das äußere Rohr (24) aus der Betriebsposition und entlang der Achse (A) zu verschieben.

2. Lenksäulenanordnung (16) nach Anspruch 1, wobei die innere Reibungsfläche und/oder die äußere Reibungsfläche (28) mindestens zwei Reibzonen (28a, 28b) umfasst, die an unterschiedlichen Positionen entlang der Achse (A) angeordnet sind, wobei sich die mindestens zwei Reibzonen (28a, 28b) bezüglich mindestens eines von Folgendem unterscheiden:
- eines jeweiligen Durchmessers (D1, D2),
- einer jeweiligen Flächenrauhigkeit und
- einer jeweiligen Flächenbeschichtung.

3. Lenksäulenanordnung (16) nach Anspruch 1 oder 2, wobei das Verformungselement (38) mindestens zwei Verformungszonen (38a, 38b, 38c, 38d, 38e) umfasst, wobei sich die mindestens zwei Verformungszonen (38a, 38b, 38c, 38d, 38e) bezüglich mindestens eines von Folgendem unterscheiden:
- einer jeweiligen geometrischen Dimension (B1, B2, B3, B4, B5),
- eines jeweiligen Materials und
- einer jeweiligen Beschichtung.

4. Lenksäulenanordnung (16) nach einem der vorhergehenden Ansprüche, wobei das Scherelement (40) mindestens zwei Scherzonen (42a, 42b) umfasst, wobei sich die mindestens zwei Scherzonen (42a, 42b) bezüglich mindestens eines von Folgendem unterscheiden:
- einer jeweiligen geometrischen Dimension,
- eines jeweiligen Materials und
- einer jeweiligen Beschichtung.

5. Lenksäulenanordnung (16) nach einem der vorhergehenden Ansprüche, wobei das Schienenelement (32) mindestens zwei Schiebezonen (32a, 32b) umfasst, die an unterschiedlichen Positionen entlang der Achse (A) angeordnet sind, wobei sich die mindestens zwei Schiebezonen (32a, 32b) bezüglich mindestens eines von Folgendem unterscheiden:
- einer jeweiligen geometrischen Dimension (W1, W2),
- einer jeweiligen Flächenstruktur,
- einer jeweiligen Flächenneigung in Bezug auf die Achse (A),
- einer jeweiligen Flächenrauhigkeit und
- einer jeweiligen Flächenbeschichtung.

6. Lenksäulenanordnung (16) nach einem der vorhergehenden Ansprüche, wobei die Lenksäulenanordnung (16) selektiv mindestens zwei unterschiedliche Betriebspositionen (I, M, O) einnehmen kann, wobei in jeder der mindestens zwei unterschiedlichen Betriebspositionen (I, M, O) ein Abschnitt unterschiedlicher Größe des inneren Rohrs (22) im Inneren des äußeren Rohrs (24) angeordnet ist, und wobei jeder der mindestens zwei unterschiedlichen Betriebspositionen (I, M, O) ein unterschiedliches Energieabsorptionsvermögen zugeordnet ist.

7. Fahrzeug (10), umfassend eine Lenksäulenanordnung (16) nach einem der vorhergehenden Ansprüche.

8. Verfahren zum Betreiben einer Lenksäulenanordnung (16) nach einem der Ansprüche 1 bis 6, umfassend:
- Absorbieren eines ersten Energiebetrags pro Abstandseinheit während eines ersten Abschnitts einer relativen Bewegung des inneren Rohrs (22) in Bezug auf das äußere Rohr (24) entlang der Achse (A) und aus der Betriebsposition heraus, und
- Absorbieren eines zweiten Energiebetrags pro Abstandseinheit während eines zweiten Abschnitts einer relativen Bewegung des inneren Rohrs (22) in Bezug auf das äußere Rohr (24) entlang der Achse (A) und aus der Betriebsposition heraus, wobei sich der zweite Energiebetrag pro Abstandseinheit von dem ersten Energiebetrag pro Abstandseinheit unterscheidet.

## Revendications

1. Ensemble de colonne de direction (16) pour un véhicule (10), comprenant :
un tube intérieur (22) et un tube extérieur (24), dans lequel le tube intérieur (22) et le tube extérieur (24) s'étendent le long d'un axe commun (A) et dans lequel dans une position opérationnelle, une partie du tube intérieur (22) est agencée à l'intérieur du tube extérieur (24), et un mécanisme d'absorption d'énergie (26) étant couplé au moins au tube intérieur (22) et étant configuré pour absorber de l'énergie en cas de mouvement relatif du tube intérieur (22) par rapport au tube extérieur (24) le long de l'axe (A) et en dehors de la position opérationnelle, dans lequel une capacité d'absorption d'énergie par unité de distance du mécanisme d'absorption d'énergie (26) est variable le long de l'axe (A),
dans lequel le mécanisme d'absorption d'énergie (26) comprend une surface de friction intérieure étant agencée sur le tube intérieur (22) et étant couplée par friction au tube extérieur (24) et/ou dans lequel le mécanisme d'absorption d'énergie (26) comprend une surface de friction extérieure (28) étant agencée sur le tube extérieur (24) et étant couplée par friction au tube intérieur (22), et
**caractérisé en ce que** le mécanisme d'absorption d'énergie (26) comprend au moins un parmi :
- un élément de déformation (38) étant couplé au moins au tube intérieur (22) et étant configuré pour se déformer lors d'un mouvement relatif du tube intérieur (22) par rapport au tube extérieur (24) en dehors de la position opérationnelle et le long de l'axe (A), et
- un élément de cisaillement (40) étant couplé au moins au tube intérieur (22) et étant configuré pour au moins partiellement se cisailler lors d'un mouvement relatif du tube intérieur (22) par rapport au tube extérieur (24) en dehors de la position opérationnelle et le long de l'axe (A), et
- un mécanisme de glissement (30) avec un élément de rail (32) étant couplé au tube intérieur (22) et un élément de coulisseau (34), dans lequel l'élément de coulisseau (34) est configuré pour glisser sur l'élément de rail (32) lors d'un mouvement relatif du tube intérieur (22) par rapport au tube extérieur (24) en dehors de la position opérationnelle et le long de l'axe (A).

2. Ensemble de colonne de direction (16) selon la revendication 1, dans lequel la surface de friction intérieure et/ou la surface de friction extérieure (28) comprend au moins deux zones de friction (28a, 28b) étant agencées à différentes positions le long de l'axe (A), dans lequel les au moins deux zones de friction (28a, 28b) diffèrent par au moins un parmi :
- un diamètre (D1, D2) respectif,
- une rugosité de surface respective, et
- un revêtement de surface respectif.

3. Ensemble de colonne de direction (16) selon la revendication 1 ou 2, dans lequel l'élément de déformation (38) comprend au moins deux zones de déformation (38a, 38b, 38c, 38d, 38e), dans lequel les au moins deux zones de déformation (38a, 38b, 38c, 38d, 38e) diffèrent par au moins un parmi :
- une dimension géométrique (B1, B2, B3, B4, B5) respective,
- un matériau respectif, et
- un revêtement respectif.

4. Ensemble de colonne de direction (16) selon l'une quelconque des revendications précédentes, dans lequel l'élément de cisaillement (40) comprend au moins deux zones de cisaillement (42a, 42b), dans lequel les au moins deux zones de cisaillement (42a, 42b) diffèrent par au moins un parmi :
- une dimension géométrique respective,
- un matériau respectif, et
- un revêtement respectif.

5. Ensemble de colonne de direction (16) selon l'une quelconque des revendications précédentes, dans lequel l'élément de rail (32) comprend au moins deux zones de glissement (32a, 32b) étant agencées à différentes positions le long de l'axe (A), dans lequel les au moins deux zones de glissement (32a, 32b) diffèrent par au moins un parmi :
- une dimension géométrique (W1, W2) respective,
- un structure de surface respective,
- une inclinaison de surface respective par rapport à l'axe (A),
- une rugosité de surface respective, et
- un revêtement de surface respectif.

6. Ensemble de colonne de direction (16) selon l'une quelconque des revendications précédentes, dans lequel l'ensemble de colonne de direction (16) peut prendre sélectivement au moins deux positions opérationnelles (I, M, O) différentes, dans lequel dans chacune des au moins deux positions opérationnelles différentes (I, M, O), une partie de taille différente du tube intérieur (22) est agencée à l'intérieur du tube extérieur (24), et dans lequel une capacité d'absorption d'énergie différente est associée à chacune des au moins deux positions opérationnelles (I, M, O) différentes.

7. Véhicule (10) comprenant un ensemble de colonne de direction (16) selon l'une quelconque des revendications précédentes.

8. Procédé pour faire fonctionner un ensemble de colonne de direction (16) selon l'une quelconque des revendications 1 à 6, comprenant de :
- absorber une première quantité d'énergie par unité de distance pendant une première partie d'un mouvement relatif du tube intérieur (22) par rapport au tube extérieur (24) le long de l'axe (A) et en dehors de la position opérationnelle, et
- absorber une seconde quantité d'énergie par unité de distance pendant une seconde partie d'un mouvement relatif du tube intérieur (22) par rapport au tube extérieur (24) le long de l'axe (A) et en dehors de la position opérationnelle, dans lequel la seconde quantité d'énergie par unité de distance est différente de la première quantité d'énergie par unité de distance.
